# FASCICULE DE BREVET EUROPEEN

(11) **EP 0 317 413 B1**
(45) Date de publication et mention de la délivrance du brevet: **27.10.1993**
(21) Numéro de dépôt: 88402847.3
(22) Date de dépôt: 14.11.1988
(51) Int. Cl.: G06F 15/66

(54) **Dispositif de traitement de données relatives à des éléments d'image**
Bildelementdatenverarbeitungsvorrichtung
Picture element data-processing device

(30) Priorité: 16.11.1987 FR 8715785
(43) Date de publication de la demande: 24.05.1989
(73) Titulaire: COMMISSARIAT A L'ENERGIE ATOMIQUE, 75015 Paris Cédex 15 (FR); ADERMIP (Association pour le Développement de l'Enseignement de l'Economie et des Recherches Midi-Pyrénées), F-31400 Toulouse (FR)
(72) Inventeur: Basille, Jean-Luc, F-31520 Ramonville Saint Agne (FR); Juvin, Didier, F-75014 Paris (FR); Latil, Jean-Yves, F-31120 Portet/Garonne (FR); Es-Safi, Hassane, F-31400 Toulouse (FR)
(74) Mandataire: Mongrédien, André

(56) Documents cités:
- EP-A- 0 236 762
- CONFERENCE PROCEEDINGS, THE 10th ANNUAL INTERNATIONAL SYMPOSIUM ON COMPUTER ARCHITECTURE, ROYAL INSTITUTE OF TECHNOLOGY, Stockholm, SE, 1983, Computer Society Press, pages 395-400; T. ERICSSON et al.: "LIPP- A SIMD multiprocessor architecture for image processing"
- IEEE 1983, INTERNATIONAL SYMPOSIUM ON CIRCUITS AND SYSTEMS, Newport Beach, California, 2-4 mai 1983, vol. 1, pages 405-408, IEEE, New York, US; D.K. ARVIND et al.: "A VLSI chip for real-time image processing"
- IEEE PROCEEDINGS-E/COMPUTERS AND DIGITAL TECHNIQUES, vol. 134, no. 2, mars 1987, pages 119-124, Stevenage, Herts, GB; K.N. NGAN et al.: "Parallel image-processing system based on the TMS32010 digital signal processor"

## Description

La présente invention concerne un dispositif de traitement de données relatives à des éléments d'image.

Elle s'applique notamment à la reconnaissance des formes.

On sait que la plupart des dispositifs de traitement de données relatives à des éléments d'image (ou pixels en anglais), repérés aux intersections de lignes et de colonnes prédéterminées, comportent des moyens de mémorisation de ces données, et des moyens de traitement de données enregistrées. Les données relatives à un élément sont traitées en relation avec des données relatives à chacun des éléments situés au moins dans l'environnement immédiat de l'élément considéré. Généralement, pour traiter des données relatives à un élément d'image, repéré par un numéro de ligne et un numéro de colonne, à l'intersection desquelles cet élément est situé, on tient compte des données relatives à des éléments situés dans une fenêtre généralement carrée, d'au moins 9 éléments. Cette fenêtre contient l'élément traité qui occupe son centre, ainsi que huit éléments environnants.

Les éléments environnants sont situés aux intersections de lignes et de colonnes voisines de la ligne et de la colonne déterminant l'emplacement de l'élément à traiter.

On connaît différents dispositifs qui permettent de traiter des données relatives à chaque élément d'image, en tenant compte des données des éléments d'image environnants, situés dans une fenêtre prédéterminée.

L'un de ces dispositifs utilise une structure dite "pipeline", qui décompose les traitements à effectuer en étapes, chaque étape étant prise en charge par un module spécifique. Les différents modules peuvent effectuer des traitements en parallèle, chaque module opérant sur les résultats du module précédent. Ce type de dispositif présente un rendement limité par le découpage des traitements en étapes différentes et s'adapte mal à différents types de traitements.

Un autre dispositif utilise une architecture dite en réseau systolique. Cette architecture peut être considérée comme une généralisation de la structure pipeline. Dans un réseau systolique, chaque module peut comporter plusieurs modules en amont et plusieurs modules en aval, mais cette structure est encore plus spécifique que la structure pipeline et plus difficile à mettre en oeuvre.

Un autre dispositif utilise des structures formées en tableaux de processeurs (processor arrays en anglais), constitués par des processeurs élémentaires disposés en réseaux généralement rectangulaires. Chaque processeur élémentaire peut être associé à un pixel, ou à un groupe de pixels, de l'image et il a accès aux pixels voisins grâce à des liaisons d'interconnexion avec les processeurs élémentaires voisins dans le réseau.

Cette structure est intéressante car elle établit une correspondance parfaite avec la décomposition de l'image en pixels repérés par lignes et par colonnes. Elle permet un parallélisme très élevé puisque tous les pixels peuvent être traités simultanément. Elle a cependant pour inconvénient, pour des raisons de technologie d'intégration, de présenter un nombre de processeurs élémentaires inférieurs aux dimensions de l'image qui peut comporter 128x128 pixels ou même 512x512 pixels. Le coût des dispositifs utilisant des structures en tableaux de processeurs est très élevé. De plus, la mise en oeuvre d'algorithmes parallèles dans de tels tableaux, et notamment d'algorithmes de balayage, est difficile.

Enfin le document de T.ERICSSON et al.: "LIPP - A SIMD multiprocessor architecture for image processing" dans CONF. PROC.OF THE 10TH ANNUAL INT. SYMP. ON COMP. ARCHITECTURE, ROYAL INST. OF TECHNOLOGY, Stockholm SE, 1983, Computer Society Press, pages 395-400; divulgue un dispositif de traitement de donnees relatives à des éléments d'image correspondant au préambule de la revendication 1 utilisant un tableau de neuf processeurs pour traiter un pixel et les neuf pixels environnants. Ici neufs pixels peuvent être traités simultanément.

La présente invention a pour but de remédier à ces inconvénients, et notamment de fournir un dispositif de traitement de données relatives à des éléments d'image repérés par lignes et par colonnes, qui se rapproche d'une structure dite en "tableaux de processeurs", sans toutefois nécessiter un nombre aussi important de processeurs, rendant beaucoup plus simple et moins coûteuse la fabrication de type "circuit intégré". Ces buts sont atteints grâce à des interconnexions judicieuses entre processeurs, grâce à une organisation hélicoïdale des données enregistrées respectivement dans les mémoires des différents processeurs ainsi interconnectés et grâce à un adressage particulier des données relatives aux éléments d'image à traiter. L'invention a aussi pour but de simplifier la programmation d'algorithmes de traitement compliqués, et de réduire ainsi le coût des traitements d'image tout en permettant la fabrication de modules de traitement à plusieurs processeurs interconnectés, facilement intégrables.

Comme on le verra plus loin en détail, plusieurs processeurs sont reliés en ligne rebouclée sur elle-même. Chaque processeur effectue le même traitement au même moment, mais sur ses propres données, chaque processeur peut être relié non seulement à ses deux voisins de gauche et de droite (distance 1), mais aussi à ses voisins de gauche et de droite situés à distance 2 et à distance 3.

L'invention a pour objet un dispositif de traitement de données relatives à des éléments d'image tel que defini par la revendication 1.

Selon une autre caractéristique de l'invention, chaque processeur est relié directement à sa mémoire pour inscrire des données dans cette mémoire, les moyens de connexion comportant, pour chaque processeur, un premier et un deuxième circuits d'aiguillage de données reliés à l'ensemble de séquencement, chaque premier circuit d'aiguillage étant en outre relié à la mémoire et au processeur correspondants, chaque deuxième circuit d'aiguillage étant relié au processeur correspondant, ce premier circuit d'aiguillage de chaque processeur étant relié aux deuxièmes circuits d'aiguillage de deux processeurs voisins par des lignes bidirectionnelles, et le deuxième circuit d'aiguillage de chaque processeur étant relié aux deuxièmes circuits d'aiguillage de deux processeurs voisins par des lignes bidirectionnelles, les premier et deuxième circuits d'aiguillage de chaque processeur de rang J compris entre j=0 et j=3 au moins, comportant des moyens pour :
a) - transmettre des données lues dans la mémoire du processeur vers ce processeur (FROME, TOPE) ;
b) - transmettre des données fournies par le processeur, vers la mémoire de ce processeur (TOME, FROPE) ;
c) - transmettre des données lues dans la mémoire d'un processeur de rang J, vers un processeur de rang J+1 (FROME, TOPED, FROMG) ;
d) - transmettre des données lues dans la mémoire d'un processeur de rang J, vers un processeur de rang J-1 (FROME, TOPEG, FROMD) ;
e) - transmettre des données fournies par un processeur de rang J, vers un processeur de rang J+1 (TOMD, FROPEG, TOPE) ;
f) - transmettre des données fournies par un processeur de rang J, vers un processeur de rang J-1 (TOMG, FROPED, TOPE) ;
g) - transmettre des données de la mémoire d'un processeur de rang J, vers un processeur de rang J+2 (FROME, TOPED, FROMG, VDO, VGI) ;
h) - transmettre des données de la mémoire d'un processeur de rang J, vers un processeur de rang J-2 (FROME, TOPEG, FROMD, VGO, VDI) ;
i) - transmettre les données d'un processeur du rang J, vers un processeur de rang J+2 (TOMD, FROPEG, TOPED, FROMG) ;
j) - transmettre des données d'un processeur de rang J, vers un processeur de rang J-2 (TOMG, FROPED, TOPEG, FROMD) ;
k) - transmettre des données d'un processeur de rang J, vers un processeur de rang J+3 (TOMD, FROPEG, TOPED, FROMG, VDO, VGI) ;
l) - transmettre des données d'un processeur de rang J, vers un processeur de rang J-3 (TOMG, FROPED, TOPEG, FROMD, VGO, VDI).

Selon une autre caractéristique, chaque premier circuit d'aiguillage de rang J comporte un multiplexeur ayant une première entrée reliée à la mémoire du processeur de rang J pour recevoir des données (FROME) lues dans cette mémoire, une deuxième entrée reliée à une sortie du deuxième circuit d'aiguillage de rang J-1 pour recevoir des données (FROPEG) fournies par ce deuxième circuit d'aiguillage de rang J-1, et une troisième entrée reliée à une sortie du deuxième circuit d'aiguillage, de rang J+1, pour recevoir des données (FROPED) fournies par ce deuxième circuit d'aiguillage, de rang J+1, ce multiplexeur comprenant une sortie reliée à une entrée (22, TOPE) du processeur de rang J, à une entrée (TOPEG) du deuxième circuit d'aiguillage de rang J-1 et à une entrée (TOPED) du deuxième circuit d'aiguillage de rang J+1, pour fournir les données reçues par le multiplexeur au processeur de rang J ou aux deuxièmes circuits d'aiguillages de rangs J-1 ou J+1, en fonction de commandes de séquencement reçues sur des entrées de commande du multiplexeur, reliées à des sorties des moyens de séquencement.

Selon une autre caractéristique, chaque deuxième circuit d'aiguillage de rang J comporte un multiplexeur relié respectivement par une première entrée, à une sortie du processeur de rang J pour recevoir des données fournies par ce processeur, une deuxième entrée reliée à la sortie du multiplexeur du premier circuit d'aiguillage de rang J, pour recevoir des données (FROME, TOPE) provenant de la mémoire de rang J, une troisième et une quatrième entrées reliées respectivement à des sorties du deuxième circuit d'aiguillage de rang J-1 pour recevoir respectivement des données (VGI, FROMG) fournies par le processeur de rang J-1 et par la mémoire de rang J-1, une cinquième et une sixième entrées reliées respectivement à des sorties du deuxième circuit d'aiguillage de rang J+1 pour recevoir respectivement des données (VDI, FROMD) fournies par le processeur et la mémoire de rang J+1, une sortie de ce multiplexeur étant reliée à une entrée du processeur de rang J, ce deuxième circuit d'aiguillage de rang J comprenant en outre un circuit logique ayant une première entrée reliée à une sortie du deuxième circuit d'aiguillage de rang J+1 pour recevoir des données (FROMD) fournies par la mémoire de rang J+1, une deuxième entrée reliée à une sortie du processeur de rang J pour recevoir des données fournies par ce processeur, et une troisième entrée reliée à une sortie du deuxième circuit d'aiguillage de rang J-1 pour recevoir des données (FROMG) fournies par la mémoire de rang J-1, ce circuit logique ayant deux sorties respectivement reliées à deux entrées du deuxième circuit d'aiguillage de rang J-1, pour fournir des données (TOMG, VGO) à la mémoire et au processeur de rang J-1, et ayant deux autres sorties respectivement reliées à deux entrées du deuxième circuit d'aiguillage de rang J+1, pour fournir des données (TOMD, VDO) à la mémoire et au processeur de rang J+1, le circuit logique et le multiplexeur du deuxième circuit d'aiguillage de rang J étant reliés par des entrées de commande à des sorties de l'ensemble de séquencement pour gérer les séquencements des données fournies par les sorties du circuit logique et par le multiplexeur du deuxième circuit d'aiguillage de rang J.

Les caractéristiques et avantages de l'invention ressortiront mieux de la description qui va suivre, donnée en référence aux dessins annexés dans lesquels :
- la figure 1 représente un exemple classique d'adressage de données dans une mémoire, ces données étant relatives à des éléments d'une image comportant 16x16 éléments,
- la figure 2 représente un exemple d'adressage hélicoïdal de données réparties dans les quatre mémoires de quatre processeurs, pour une image de 16x16 éléments,
- la figure 3 représente schématiquement un dispositif conforme à l'invention,
- la figure 4 représente schématiquement un premier circuit d'aiguillage de données intervenant dans le dispositif de l'invention,
- la figure 5 représente schématiquement un deuxième circuit d'aiguillage de données, intervenant dans le dispositif de l'invention.

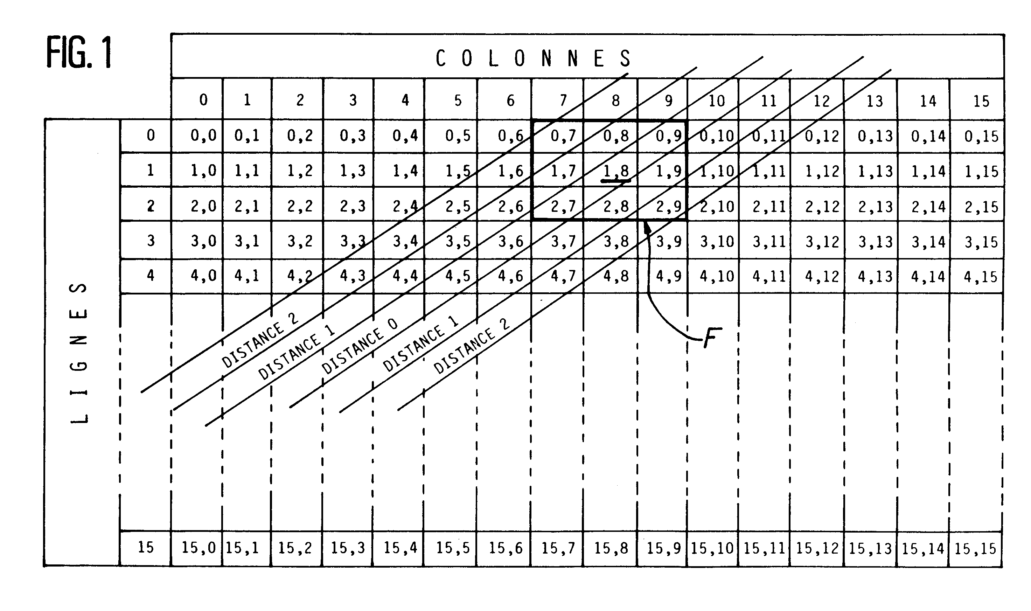

La figure 1 est un tableau qui représente schématiquement différentes adresses d'une mémoire dans laquelle sont enregistrées des données respectives d'éléments d'image. Dans cet exemple, on considère que les données enregistrées sont relatives à des éléments d'image situés à l'intersection de colonnes numérotées de 0 à 15 et de lignes numérotées de 0 à 15.

Chaque paire de chiffres telle que 0.0 par exemple, désigne une adresse de mémoire dans laquelle sont enregistrées les données relatives à un élément d'image situé à l'intersection de la colonne numéro 0 et de la ligne numéro 0. Les valeurs des données (par exemple l'intensité de chaque élément) ne sont pas indiquées dans ce tableau.

De la même manière, la paire de chiffres 1.3 désigne l'adresse de mémoire dans laquelle sont enregistrées les données relatives à l'élément d'image situé à l'intersection de la ligne 1 et de la colonne 3. Cette organisation d'adressage de données dans une memoire est l'organisation la plus classique. Les dispositifs de traitement de données connus dans l'état de la technique, permettent de traiter des données relatives à chaque élément d'image contenu dans cette mémoire, en traitant non seulement les données relatives à un élément d'image considéré, mais également les données relatives à des éléments d'image voisins de celui-ci, contenus dans une fenêtre de dimensions prédéterminées.

C'est ainsi par exemple que les données relatives à l'élément d'image situées à l'adresse 1.8 sont traitées en tenant compte des données des éléments d'image voisins contenus par exemple dans une fenêtre F de dimensions 3x3 contenant 9 éléments d'image. Cette fenêtre peut être de dimensions supérieures et contenir par exemple 5x5=25 éléments d'image, l'élément d'image à traiter occupant toujours le centre de la fenêtre.

On définit de manière connue, différentes distances de repérage des éléments d'image voisins de l'élément considéré. C'est ainsi que dans l'exemple choisi, où l'élément d'image à traiter occupe l'adresse 1.8, on considère que l'élément d'image dont les données occupent l'adresse 1.8 est situé à la distance 0 de l'élément d'image choisi. De la même manière, on considère que les éléments d'image dont les données occupent les adresses 1.7 et 1.9 et les adresses 0.8 et 2.8 sont situés à la distance 1 de l'élément choisi. Enfin, les élments d'image 0.7, 0.9, 2.7 et 2.9 sont considérés comme étant à distance 2 de l'élément central choisi.

Il serait aussi possible dans une fenêtre de dimensions supérieures de définir des distances de valeurs supérieures à 2.

On constate à l'aide de cet exemple, que tout traitement d'un élément d'image situé à une adresse prédéterminée, nécessite non seulement l'accès aux données relatives à cet élément situé à cette adresse prédéterminée, mais également et au moins, l'accès aux données relatives à des éléments d'image situés à des adresses de distance 1 et de distance 2.

Comme indiqué plus haut, les dispositifs de traitement connus utilisent des mémoires dans lesquelles les données sont enregistrées comme représenté sur le tableau de la figure 1. Ce type d'organisation d'adressage de données en mémoire a pour inconvénient de nécessiter un nombre très important de processeurs de traitement et d'interconnexions entre ces processeurs.

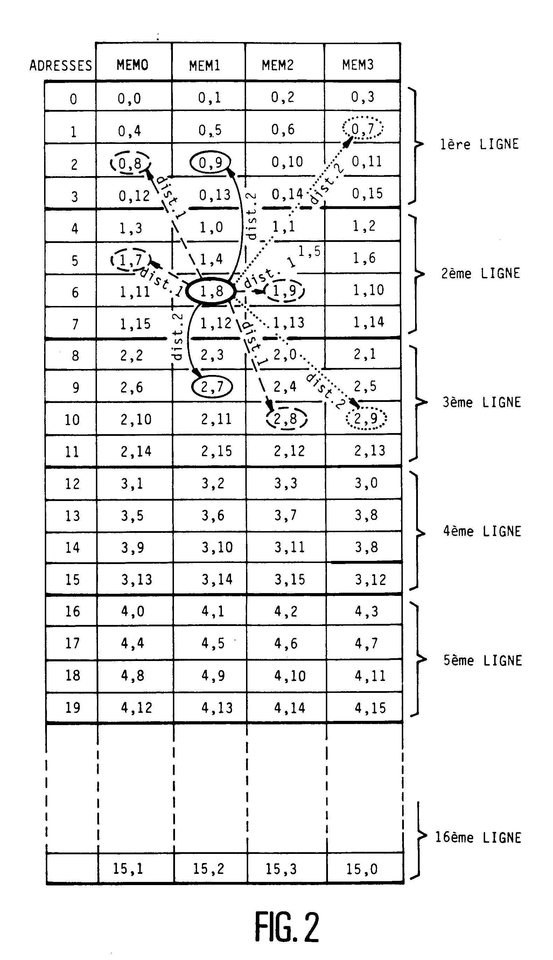

La figure 2 est un tableau représentant une organisation hélicoïdale d'adressage des données ; ce type d'organisation est utilisé dans le dispositif de l'invention. Les données sont ici enregistrées dans quatre mémoires reliées respectivement à quatre processeurs identiques. Ce principe développé pour quatre processeurs, peut être étendu à un nombre quelconque de processeurs

Ces mémoires sont appelées MEM0, MEM1, MEM2, MEM3 sur la figure. A la première adresse de la première mémoire MEM0, sont enregistrées les données qui étaient enregistrées à l'adresse 0.0 de la mémoire de la figure 1. A l'adresse 0 de la deuxième mémoire MEM1, sont enregistrées les données qui étaient enregistrées à l'adresse 0.1 de la mémoire de la figure 1, et ainsi de suite pour la troisième mémoire MEM3 dans laquelle sont enregistrées à l'adresse 0 les données qui étaient enregistrées à l'adresse 0.3 de la mémoire de la figure 1. A l'adresse 1 de la mémoire MEM0 sont enregistrées les données qui étaient enregistrées à l'adresse 0.4 de la mémoire de la figure 1, et ainsi de suite jusqu'à l'adresse 3 de la mémoire MEM3 dans laquelle sont enregistrées les données qui étaient enregistrées à l'adresse 0.15 de la mémoire de la figure 1. Les données enregistrées aux adresses 0 à 3 correspondent, dans l'exemple considéré, aux éléments d'image d'une première ligne de 16 éléments de cette image.

Pour la deuxième ligne de 16 éléments de cette image, on enregistre à l'adresse 4 de la mémoire MEM1 les éléments d'image qui étaient enregistrés à l'adresse 1.0 de la mémoire de la figure 1. On enregistre à l'adresse 4 de la mémoire MEM2 les éléments d'image qui étaient enregistrés à l'adresse 1.1. On enregistre aussi à l'adresse 4 de la mémoire MEM3, les éléments d'image qui étaient enregistrés à l'adresse 1.2, tandis qu'on enregistre à l'adresse 4 de la mémoire MEM0, des éléments d'image qui étaient enregistrés à l'adresse 1.3 de la mémoire de la figure 1. A l'adresse 5 de la mémoire MEM1, on enregistre l'élément d'image qui était enregistré à l'adresse 1.4 de la mémoire de la figure 1. Et ainsi de suite pour la deuxième ligne de l'image de 16 éléments: l'adresse 7 de la mémoire MEM0 contient les données relatives à l'élément d'image qui était enregistré à l'adresse 1.15 de la mémoire de la figure 1.

Pour la troisième ligne, on enregistrera dans la mémoire MEM2, à l'adresse 8 de cette mémoire, les données relatives à l'élément d'image qui était enregistré à l'adresse 2.0 de la mémoire de la figure 1.

On voit sur cette figure, que lorsque l'on passe d'une ligne à une autre, les données relatives à un premier élément d'image d'une ligne sont enregistrées à une adresse de l'une des mémoires, tandis que les données relatives au premier élément d'image de la ligne suivante sont enregistrées dans la mémoire suivante. C'est ainsi par exemple que les données relatives au premier élément d'image de la troisième ligne (qui étaient enregistrées à l'adresse 2.0 de la mémoire de la figure 1) sont enregistrées à l'adresse 8 de la mémoire MEM2, tandis que les données relatives au premier élément d'image de la quatrième ligne (qui étaient enregistrées à l'adresse 3.0 de la mémoire de la figure 1) sont enregistrées à l'adresse 12 de la mémoire MEM3.

De la même manière, les données relatives au premier élément d'image de la cinquième ligne (qui étaient enregistrées à l'adresse 4.0 dans la mémoire de la figure 1) sont enregistrées à l'adresse 16 de la mémoire MEM0, etc.

Si on considère maintenant la fenêtre de traitement F de la figure 1 et l'élément ou pixel central de cette fenêtre qui était enregistré à l'adresse 1.8 de la mémoire de la figure 1, cet élément est maintenant enregistré à l'adresse 6 de la mémoire MEM1. Les données des éléments à distance 2, qui étaient enregistrées aux adresses 0.9 et 2.7 sont maintenant enregistrées respectivement aux adresses 2 et 9 de la mémoire MEM1. Il en résulte que, dans cet exemple, le processeur relié à la mémoire MEM1 a un accès direct à ces éléments, qui se trouvent maintenant situés à distance 0.

Les données des éléments qui étaient situées à distance 1 et qui étaient enregistrées aux adresses 0.8 et 1.7 de la mémoire de la figure 1 sont maintenant enregistrées respectivement aux adresses 2 et 5 de la mémoire MEM0 et demeurent à distance 1. Les données des autres éléments à distance 1, qui étaient enregistrées aux adresses 1.9 et 2.8 sont maintenant enregistrées respectivement aux adresses 6 et 10 de la mémoire MEM2 et demeurant à distance 1. Le processeur qui doit traiter les données de l'élément 1.8 doit ainsi avoir accès aux données des éléments à distance 1 contenues dans les mémoires MEM0 et MEM2 des processeurs voisins.

De la même manière, les données des éléments à distance 2, qui étaient enregistrées aux adresses 0.7 et 2.9 de la mémoire de la figure 1 sont maintenant enregistrées aux adresses 1 et 10 de la mémoire MEM3 et demeurent à distance 2. Il en résulte que le processeur qui traite les données de l'élément d'adresse 1.8, doit aussi avoir accès à la mémoire MEM3 du quatrième processeur pour pouvoir traiter les éléments situés à distance 2.

On voit dans cet exemple que le nombre minimum de mémoires et de processeurs qu'il est nécessaire de disposer pour traiter des éléments d'image situés dans une fenêtre de dimensions 3x3 est égal à 4. Ce nombre convient parfaitement pour traiter des images comportant 16 éléments par ligne, ces éléments étant situés à l'intersection de ces 16 lignes avec 16 mêmes colonnes. On voit également que chaque processeur de rang J (entre 0 et 3 doit être relié non seulement à sa propre mémoire, mais également aux mémoires et aux processeurs voisins de rang J+1 et J-1, ainsi qu'aux mémoires et aux processeurs de rang J+2 et J-2. Ces processeurs selon l'invention sont donc reliés selon une configuration en ligne bouclée. Si on considère que le processeur de rang j est relié à la mémoire MEM1, les processeurs de rang J+1 et J-1 à distance 1 sont respectivement reliés aux mémoires MEM2 et MEM0, tandis que le processeur de rang J+2 à distance 2 est relié à la mémoire MEM3. Le processeur de rang J-2 à distance 2, est en fait le processeur de rang J+1 dans cet exemple, puisque les processeurs sont reliés en ligne bouclée.

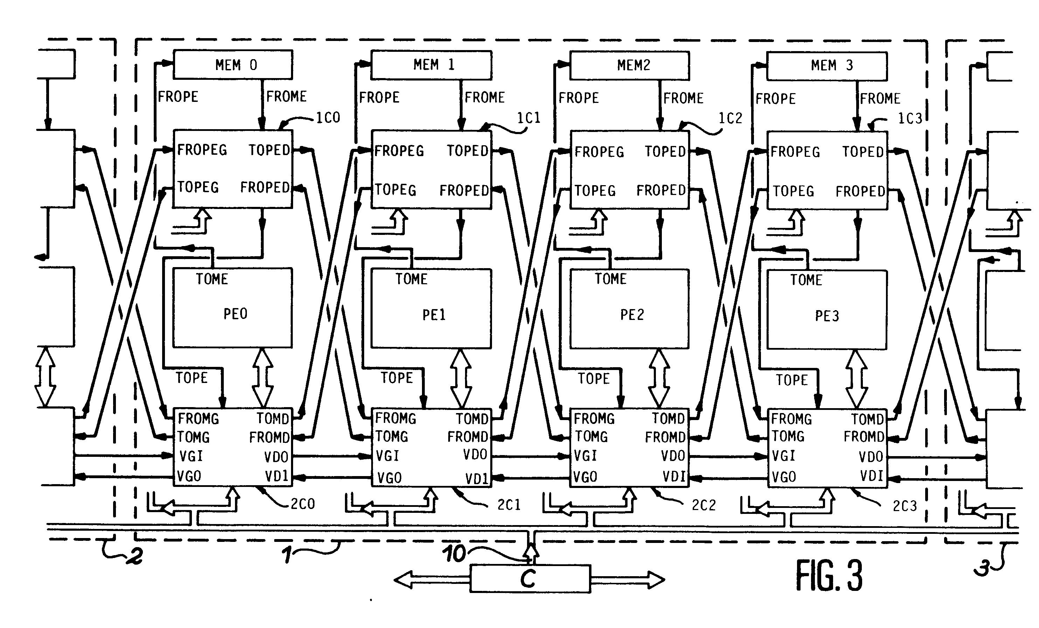

La figure 3 représente schématiquement un dispositif de traitement de données relatives à des éléments d'image, conforme à l'invention. Ce dispositif comprend des moyens de traitement et de mémorisation, pour effectuer les traitements d'éléments d'image situés dans des fenêtres, ayant chacune au moins 9 éléments. Ces éléments d'image sont situés sur des lignes successives appartenant respectivement pour chaque ligne, à des mêmes colonnes successives prédéterminées dans une image. Le dispositif représenté schématiquement en 1 sur la figure 3 permet de traiter par exemple des données relatives à des éléments d'une image situées à l'intersection de 16 lignes et 16 colonnes ; les moyens de traitement comportent au moins un groupe de 4 processeurs identiques PE0, PE1, PE2, PE3, repérés du rang i=0 au rang i=3, et des moyens de mémorisation constitués par des mémoires MEM0, MEM1, MEM2, MEM3, respectivement reliées à ces processeurs et repérées du rang J=0 au rang J=3. Dans l'exemple considéré de traitement des données des éléments d'une image de 16 lignes et 16 colonnes, les contenus des mémoires sont ceux qui ont été indiqués en exemple à la figure 2.

Les données relatives aux éléments des lignes et des colonnes prédéterminés sont rangées dans les mémoires MEM0, MEM1, MEM2, MEM3, selon l'adressage hélicoïdal mentionné plus haut. Les moyens de traitement du dispositif 1, comportent aussi des moyens de connexion pour relier chaque processeur à sa mémoire et pour interconnecter chaque processeur avec chaque processeur voisin du groupe de processeurs considéré. Ces processeurs sont reliés entre eux, comme on le verra plus loin en détail, selon leurs rangs successifs, conformément à une configuration dite en ligne bouclée. Les moyens de connexion seront décrits plus loin en détail. Ils sont repérés du rang J=0 au rang J=3 et ils sont représentés respectivement sur cette figure, pour chaque processeur, en 1C0, 2C0 - 1C1, 2C1 - 1C2, 2C2 - 1C3, 2C3. Ces moyens de connexion sont reliés à un ensemble de commande C qui permet de séquencer les opérations de traitement et d'adressage effectuées par les processeurs.

On a aussi représenté sur cette figure deux autres dispositifs 2, 3 identiques au dispositif 1, afin de montrer la modularité du système, l'image étant alors répartie selon le même principe sur l'ensemble des processeurs.

Chaque processeur tel que PE1 par exemple est directement relié à sa mémoire MEM1 pour inscrire, comme on le verra plus loin en détail, des données dans cette mémoire.

Les moyens de connexion comportent pour chaque processeur, un premier et un deuxième circuits d'aiguillage. Pour le processeur PE1 par exemple, le premier circuit d'aiguillage est représenté en 1C1, tandis que le deuxième circuit d'aiguillage est représenté en 2C1.

Le premier circuit d'aiguïllage 1C1 est relié à la mémoire MEM1 et au processeur PE1. Le deuxième circuit d'aiguillage 2C1 est relié au processeur PE1. Le premier circuit d'aiguillage de chaque processeur, tel que PE1 par exemple, est aussi relié aux deuxièmes circuits d'aiguillage 2C0, 2C2 des deux processeurs voisins PE0, PE2, par des lignes bidirectionnelles. Enfin, le deuxième circuit d'aiguillage de chaque processeur est relié aux deuxièmes circuits d'aiguillage de deux processeurs voisins. C'est ainsi par exemple que le deuxième circuit d'aiguillage 2C1 du processeur PE1 est relié aux deux circuits d'aiguillage 2C0, 2C2 des deux processeurs voisins PE0, PE2, par des lignes bidirectionnelles.

Comme on le verra plus loin en détail, les premier et deuxième circuits d'aiguillage de chaque processeur comportent des moyens qui permettent :
a) - de transmettre des données lues dans la mémoire du processeur, vers ce processeur. C'est ainsi par exemple que la mémoire MEM1 du processeur PE1 peut transmettre des données lues dans cette mémoire, vers le processeur, par la liaison FROME, TOPE,
b) - de transmettre des données fournies par le processeur, vers la mémoire de ce processeur, par la liaison TOME, FROPE,
c) - de transmettre des données lues dans la mémoire d'un processeur de rang J, vers un processeur de rang J+1. C'est ainsi par exemple que des données lues dans la mémoire MEM1 du processeur PE1 de rang J=1 peuvent être transmises vers le processeur PE2 de rang J+1=2 (liaison FROME, TOPED, FROMG),
d) - de transmettre des données lues dans la mémoire d'un processeur de rang J, vers un processeur de rang J-1. C'est ainsi par exemple que des données lues dans la mémoire du processeur MEM2 de rang J=2, peuvent être transmises vers le processeur PE1 de rang J-1=1 (liaison FROME, TOPEG, FROMD),
e) - de transmettre des données fournies par un processeur de rang J, vers un processeur de rang J+1. C'est ainsi par exemple que les données fournies par le processeur PE1 de rang J=1 peuvent être transmises vers le processeur PE2 de rang J+1=2 (liaison TOMD, FROPED, TOPE),
f) - de transmettre des données fournies par un processeur de rang J vers un processeur de rang J-1. Des données fournies par le processeur PE2 de rang J=2 par exemple peuvent être transmises vers le processeur PE1 de rang J-1=1 (liaison TOMG, FROPED, TOPE),
g) - de transmettre des données de la mémoire d'un processeur de rang J vers un processeur de rang J+2. Ainsi par exemple, des données provenant de la mémoire MEM0 du processeur de rang J=0 peuvent être transmises vers le processeur PE2 de rang J+2=2 (liaison FROME, TOPED, FROMG, VDO, VGI),
h) - de transmettre des données de la mémoire d'un processeur de rang J vers un processeur de rang J-2. Des données peuvent être transmises par exemple de la mémoire MEM2 du processeur de rang J=2, vers le processeur PE0 de rang J-2=0 (liaison FROME, TOPEG, FROMD, VGO, VDI),
i) - de transmettre des données d'un processeur de rang J, vers un processeur de rang J+2. Il est possible par exemple de transmettre des données du processeur PE0 de rang J=0 vers le processeur PE2 de rang J+2=2 (liaison TOMD, FROPEG, TOPED, FROMG),
j) - de transmettre des données d'un processeur de rang J vers un processeur de rang J-2. Il est possible par exemple de transmettre des données du processeur PE2 de rang J=2, vers le processeur PE0 de rang J-2=0 (liaison TOMG, FROPED, TOPEG, FROMD),
k) - de transmettre des données d'un processeur de rang J vers un processeur de rang J+3. Il est ainsi possible, par exemple, de transmettre des données du processeur PE0 de rang J=0, vers le processeur PE3 de rang J+3=3 (liaison TOMD, FROPEG, TOPED, FROMG, VDO, VGI),
l) - de transmettre des données d'un processeur de rang J vers un processeur de rang J-3. Il est ainsi possible de transmettre des données du processeurs PE3 de rang J=3 vers le processeur PE0 de rang J-3=0 (liaison TOMG, FROPED, TOPEG, FROMD, VGO, VDI).

Les liaisons qui permettent ces différentes transmissions seront décrites plus loin en détail.

Il est évident que le système étant bouclé et comportant dans l'exemple considéré, seulement quatre processeurs et quatre mémoires, repérés du rang J=0 au rang J=3, la transmission de données du processeur PE2 par exemple, de rang J=2, à un processeur de rang J+3 revient à une transmission de données du processeur PE2 au processeur PE1 qui occupe sur la boucle le troisième rang après le processeur PE2.

Les différentes connexions représentées sur cette figure ont les significations suivantes, pour chaque processeur, sa mémoire, ainsi que les premier et deuxième circuits d'aiguillage qui lui sont associés :
FROME désigne les chemins des données transmises par la mémoire vers le processeur à travers le premier circuit d'aiguillage (1C1 par exemple pour la mémoire MEM1 et pour le processeur PE1),
TOPE désigne les chemins de données appliquées au deuxième circuit d'aiguillage (2C1 par exemple) pour être transmises au processeur PE1 et qui proviennent de la mémoire MEM1 (données FROME) après avoir traversé le premier circuit d'aiguillage 1C1,
FROPEG/TOMD désigne des chemins de données vers la mémoire d'un processeur (MEM1 par exemple), en provenance d'un processeur situé plus à gauche (PE0 par exemple) dans le groupe,
FROMD/TOPEG désigne des chemins de données de la mémoire MEM1 par exemple, d'un processeur vers un processeur (TOPEG) plus à gauche (le processeur PE0 par exemple),
TOMG/FROPED désigne des chemins de données vers la mémoire d'un processeur (MEM0 par exemple), en provenance (FROPED) d'un processeur plus à droite (PE1 par exemple),
TOPED/FROMG désigne des chemins de données vers un processeur (PE1 par exemple) en provenance (FROMG) de la mémoire d'un processeur plus à gauche dans le groupe (MEM0 par exemple),
VDO,VGI désigne des chemins de données reçues par un processeur (PE1 par exemple) en provenance (VDO) d'un processeur plus à gauche dans le groupe (PE0 par exemple) (à travers les deuxiémes circuits d'aiguillage de ces processeurs),
VDI,VGO désigne des chemins de données reçues par un processeur (PE0 par exemple) en provenance (VGO) d'un processeur plus à droite dans le groupe (PE1 par exemple) (à travers les deuxièmes circuits d'aiguillage de ces processeurs).

Les liaisons permettant ces transmissions sont représentées schématiquement sur la figure et font intervenir les processeurs, les mémoires ainsi que les premier et deuxième circuits d'aiguillage reliés respectivement à chacun de ces processeurs. Les circuits d'aiguillage ainsi que leurs interventions dans ces transmisions seront décrits plus loin en détail.

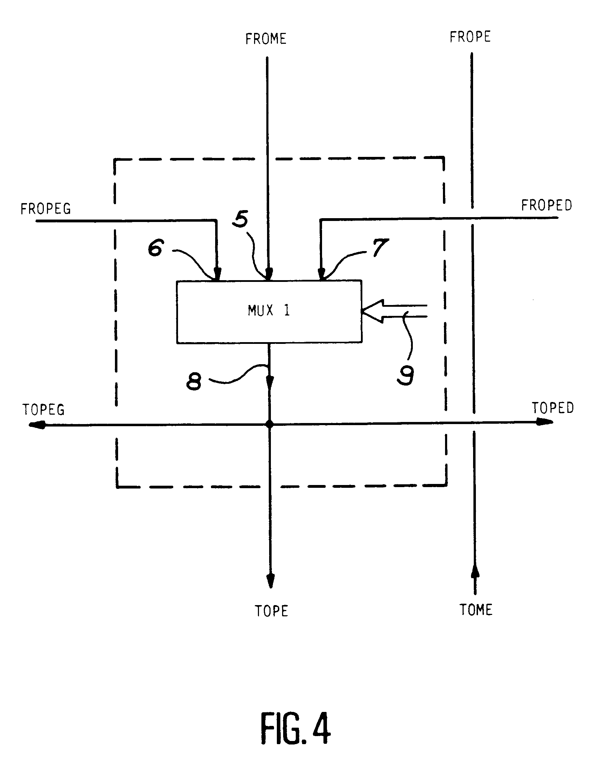

La figure 4 représente schématiquement le premier circuit d'aiguillage tel que 1C1 par exemple, de rang J=1, intervenant dans le dispositif de l'invention. Les autres circuits d'aiguillage 1C0, 1C2, 1C3 sont bien entendu identiques à celui de la figure 4. Ce premier circuit d'aiguillage de rang J=1 par exemple comporte un multiplexeur MUX1 ayant une première entrée 5, reliée à la mémoire MEM1 du processeur PE1 de même rang J=1, pour recevoir des données (FROME) lues dans cette mémoire. Ce multiplexeur comprend aussi une deuxième entrée 6 (FROPEG) reliée à une sortie du deuxième circuit d'aiguillage 2C0 (qui sera décrit plus loin en détail), de rang J-1=0 dans l'exemple considéré, pour recevoir des données (TOMD) fournies par ce deuxième circuit d'aiguillage. Enfin, ce multiplexeur comprend une troisième entrée 7 (FROPED) reliée à une sortie du deuxième circuit d'aiguillage 2C2 de rang J+1=2 pour recevoir des données (TOMG) fournies par ce deuxième circuit d'aiguillage 2C2 de rang 2.

Le multiplexeur MUX1 comprend une sortie 8 qui est reliée (liaison TOPE) au processeur PE1 de même rang j=1. Cette sortie 8 est aussi reliée (liaison TOPEG, FROMD), à une entrée du deuxième circuit d'aiguillage 2C0 de rang J-1=0. Enfin, la sortie 8 est reliée (liaison TOPED, FROMG) à une entrée du deuxième circuit d'aiguillage 2C2, de rang J+1=2. Cette sortie founit les données reçues par le multiplexeur de rang 1 par exemple, sur ses entrées 5, 6 ou 7, soit au processeur PE1 de même rang, soit aux deuxièmes circuits d'aiguillage 2C0 ou 2C1, de rang J-1=0 ou J+1=2, en fonction de commandes reçues sur des entrées 9, reliées à des sorties 10 des moyens de commande C (figure 1).

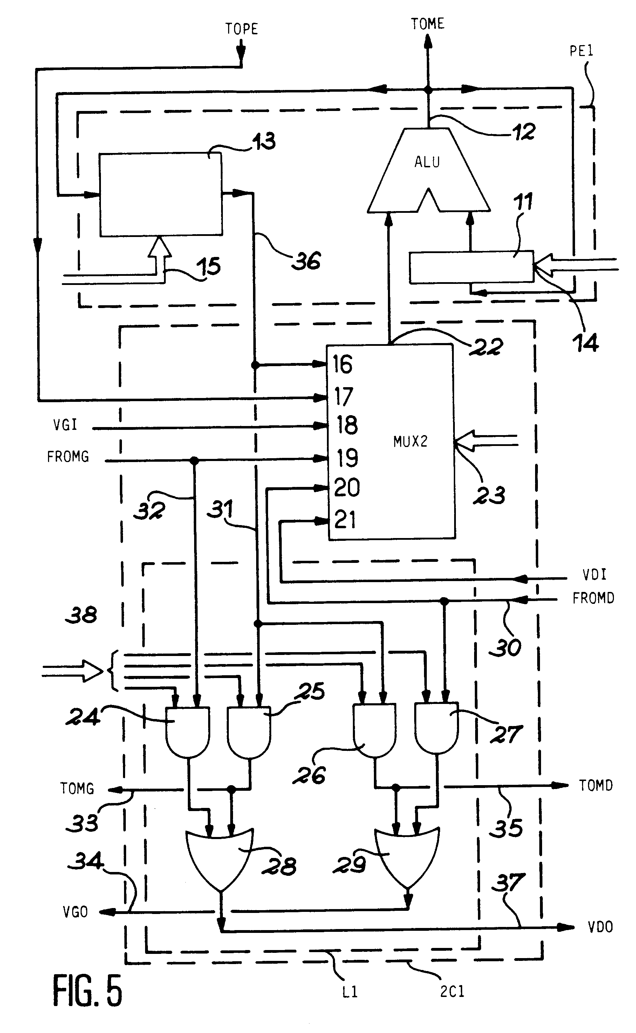

La figure 5 représente schématiquement l'un des processeurs (PE1 par exemple de rang 1) utilisé dans le dispositif de l'invention, ainsi qu'un deuxième circuit d'aiguillage 2C1 intervenant dans ce dispositif. Le processeur PE1 représenté schématiquement sur cette figure comprend, de manière connue, et très schématiquement, une unité arithmétique et logique ALU, une bascule à verrouillage 11 dont une entrée est reliée à une sortie 12 de l'unité ALU. Cette sortie 12 est aussi reliée à la mémoire MEM1 du processeur (liaison TOME, FROPE). La sortie de la bascule 11 à verrouillage est reliée à une entrée de l'unité ALU. Ce processeur comprend aussi une mémoire locale 13 (formée généralement d'un bloc de registres) dont une entrée est reliée à la sortie 12 de l'unité ALU et dont une sortie 17 est reliée au deuxième circuit d'aiguillage 2C1 correspondant. La bascule 11 et la mémoire locale 13 comportent respectivement des entrées de commande 14, 15 reliées aux sorties 10 de l'ensemble C de commande de séquencement.

La bascule 11 et la mémoire locale 13 constituent, de manière connue, des registres tampon de l'unité arithmétique et logique ALU.

Le deuxième circuit d'aiguillage 2C1 de rang 1 par exemple, ainsi que tous les autres circuits d'aiguillage de rangs différents, comportent un multiplexeur MUX2 qui est relié par une première entrée 16 à la sortie 36 du processeur PE1 de même rang J=1, pour recevoir les données fournies par ce processeur et provisoirement enregistrées dans le bloc de registres 13. Le multiplexeur MUX2 comprend aussi une deuxième entrée 17, reliée à la sortie du multiplexeur MUX1 (liaison TOPE) de même rang J=1, pour recevoir des données provenant de la mémoire MEM1 de même rang (liaison FROME).

Une troisième et une quatrième entrées 18, 19 du multiplexeur MUX2 sont respectivement reliées à des sorties du deuxième circuit d'aiguillage (liaison VGI, FROMG) 2C0, de rang J-1=0, pour recevoir respectivement de ce circuit, des données fournies soit par le processeur PE0 de rang J-1=0, soit par la mémoire MEM0 de rang j-1=0.

Une cinquième et une sixième entrées 20, 21 du multiplexeur MUX2 sont respectivement reliées à des sorties du deuxième circuit d'aiguillage 2C2 (liaisons VDI, FROMD), pour recevoir respectivement des données fournies par le processeur PE2 ou par la mémoire MEM2, de rang J+1=2. Une sortie 22 de ce multiplexeur est reliée à une entrée du processeur PE1 de même rang J=1, pour transmettre à l'unité arithmétique et logique ALU de ce processeur, certaines des données reçues par le multiplexeur. Des entrées de commande 23 du multiplexeur MUX2 sont reliées à des sorties de l'ensemble de commande C de la figure 1.

Le deuxième circuit d'aiguillage 2C1 de rang J=1 comprend aussi un circuit logique L1. Ce circuit logique qui est constitué par exemple de portes logiques 24, 25, 26, 27 de type ET, et de portes logiques 28, 29 de type OU, dont on ne décrira pas les connexions en détail, présente une première entrée 30 reliée à une sortie du deuxième circuit d'aiguillage 2C2 de rang J+1=2 (liaison FROMD), pour recevoir des données fournies par la mémoire MEM2 de rang 2.

Le circuit logique L1 présente aussi une deuxième entrée 31, reliée à la sortie 36 du processeur PE1 de même rang J=1, pour recevoir des données fournies par ce processeur. Ce circuit présente aussi une troisième entrée 32 reliée à une sortie du deuxième circuit d'aiguillage 2C0 (liaison FROMG), de rang J-1=0, pour recevoir des données fournies par la mémoire MEM0 de rang 0.

Le circuit logique L1 présente deux sorties respectivement reliées (liaisons TOMG, VGO) à deux entrées du deuxième circuit d'aiguillage 2C0, de rang J-1, pour fournir des données à la mémoire MEM0 et au processeur PE0 de rang J-1=0.

Le deuxième circuit d'aiguillage 2C1 présente aussi deux autres sorties 35, 37 respectivement reliées (liaisons TOMD, VDO) à deux entrées du deuxième circuit d'aiguillage 2C2, de rang J+1=2, pour fournir des données à la mémoire MEM2 et au processeur PE2, de rang 2.

Le circuit L1 présente aussi des entrées de commande 38 des portes qui le constituent. Ces entrées sont reliées à des sorties de commande de l'ensemble de séquencement C de la figure 1.

Les premier et deuxième circuits d'aiguillage tels que ceux qui viennent d'être décrits et qui sont identiques du rang i=0 au rang I=4, permettent d'effectuer les opérations a à l énumérées plus haut :
a) - la transmission des données lues dans une mémoire de rang J, vers ce processeur de même rang, s'effectue de la manière suivante : un ordre de commande est appliqué au multiplexeur MUX1 sur son entrée 9 et la liaison FROME, TOPE est établie à travers le multiplexeur MUX2 qui reçoît l'ordre de commande nécessaire sur son entrée 23.
b) - la transmission des données fournies par un processeur de rang J vers la mémoire de même rang est établie directement par la liaison TOME, FROPE.
c) - la transmission des données lues dans la mémoire d'un processeur de rang J vers un processeur de rang J+1 est établie de la manière suivante : on suppose par exemple que des données sont à transmettre de la mémoire MEM0 du processeur de rang 0, vers le processeur PE1 de rang 1. Le premier circuit d'aiguillage 1C0 établit, grâce au multiplexeur MUX1, la liaison FROME, TOPED, FROMG, avec le multiplexeur MUX2 du deuxième circuit d'aiguillage 2C1 de rang 1. Un ordre de commande appliqué sur l'entrée 23 de ce multiplexeur permet de transmettre les données provenant de la mémoire MEM0 vers le processeur PE1.
d) - Cette opération consiste à transmettre des données lues dans la mémoire d'un processeur de rang J vers un processeur de rang J-1. On considère par exemple qu'il est nécessaire de transférer des données de la mémoire MEM1 de rang 1, vers le processeur PE0 de rang 0. Pour cela, le multiplexeur MUX1 du premier circuit d'aiguillage 1C1 établit la connexion FROME,, TOPEG, FROMD, entre la mémoire MEM1 et le multiplexeur MUX2 du deuxième circuit d'aiguillage 2C0. Un ordre appliqué sur l'entrée de commande 23 de ce multiplexeur permet de transmettre les données provenant de la mémoire MEM1 vers le processeur PE0.
e) - Cette opération consiste à transmettre des données fournies par un processeur de rang J, vers un processeur de rang J+1. Cette opération intervient quand on souhaite par exemple transmettre des données du processeur PE0 de rang J=0 vers le processeur PE1 de rang J=1. A cet effet, les données fournies par la sortie 36 du processeur PE0, sont appliquées au circuit logique L0 du deuxième circuit d'aiguillage 2C0, qui établit la connexion TOMD entre ce deuxième circuit d'aiguillage 2C0 et le premier circuit d'aiguillage 1C1 de rang J+1. Le multiplexeur MUX1 établit alors la connexion FROPEG, TOPE entre ce premier circuit d'aiguillage 1C1 de rang 1, et le processeur PE1 correspondant, via le multiplexeur MUX2 du deuxième circuit d'aiguillage 2C1 de rang 1.
f) - Cette opération consiste à transmettre des données fournies par un processeur de rang J, vers un processeur de rang J-1. Cette opération intervient par exemple lorsqu'on souhaite transmettre des données du processeur PE1 de rang 1, vers le processeur PE0 de rang J-1=0. A cet effet, le deuxième circuit logique 2C1 du processeur PE1 établit la connexion TOMG, FROPED, entre ce deuxième circuit logique et le multiplexeur MUX1 du premier circuit logique 1C0 de rang J-1=0. Ce multiplexeur établit alors la liaison TOPE avec le multiplexeur MUX2 du deuxième circuit d'aiguillage 2C0 de rang 0 relié au processeur PE0.
g) - Cette opération consiste à transmettre des données de la mémoire d'un processeur de rang J, vers un processeur de rang J+2. C'est le cas par exemple lorsque l'on souhaite transmettre des données de la mémoire MEM0 du processeur PE0, vers le processeur PE2 de rang J+2=2. A cet effet, le premier circuit d'aiguillage 1C0 relié à la mémoire MEM0 établit, grâce au multiplexeur MUX1, la connexion FROME, TOPED, FROMG, avec le deuxième circuit d'aiguillage 2C1 de rang J+1. Le deuxième circuit d'aiguillage 2C1, de rang 1 établit alors la connexion FROMG, VDO, VGI, avec le deuxième circuit d'aiguillage 2C2 de rang 2. Le multiplexeur MUX2 du deuxième circuit d'aiguillage 2C2 permet alors de transférer les données reçues vers le processeur PE2.
h) - Cette opération consiste à transmettre les données de la mémoire d'un processeur de rang J, vers un processeur de rang J-2. C'est ainsi par exemple, lorsqu'il est nécessaire de transmettre des données de la mémoire MEM2 du processeur PE2, vers le processeur PE0 de rang J-2=0. A cet effet, le premier circuit d'aiguillage 1C2 établit la liaison FROME, TOPEG, FROMD, entre la mémoire MEM2 de rang 2 et le deuxième circuit d'aiguillage 2C1 de rang 1. Ce deuxième circuit d'aiguillage 2C1 établit alors la liaison FROMD, VGO, VDI, avec le deuxième circuit d'aiguillage 2C0 du processeur de rang 0. Le multiplexeur MUX2 transmet alors les données vers le processeur PE0.
i) - Cette opération consiste à transmettre les données d'un processeur de rang J vers un processeur de rang J+2. C'est le cas par exemple lorsqu'il est nécessaire de transmettre des données du processeur PE0 de rang 0, vers le processeur PE2 de rang 2. A cet effet, le deuxième circuit d'aiguillage 2C0 du processeur PE0 établit la liaison TOMD, FROPEG, entre ce circuit et le premier circuit d'aiguillage 1C1 du processeur PE1 de rang 1. Ce premier circuit d'aiguillage 1C1 établit la liaison FROPEG, TOPED, FROMG, grâce au multiplexeur MUX1, avec le deuxième circuit d'aiguillage 2C2 du processeur de rang 2. Le multiplexeur MUX2 du circuit d'aiguillage 2C2 établit alors la liaison avec le processeur PE2 de rang 2.
j) - Cette opération consiste à transmettre des données d'un processeur de rang J vers un processeur de rang J-2. C'est ainsi par exemple, lorsqu'il est nécessaire de transmettre des données du processeur PE2 de rang 2, vers le processeur PE0 de rang 0. A cet effet, le deuxième circuit d'aiguillage 2C2 du processeur PE2 établit la connexion TOMG, FROPED, avec le premier circuit d'aiguillage 1C1 du processeur de rang 1. Le multiplexeur MUX1 du premier circuit d'aiguillage 1C1 établit alors la connexion FROPED, TOPEG, FROMD, avec le deuxième circuit d'aiguillage 2C0 du processeur de rang 0. Ce deuxième circuit d'aiguillage 2C0 établit alors, grâce au multiplexeur MUX2, la liaison avec le processeur PE0.
k) - Cette opération consiste à transmettre des données d'un processeur de rang J, vers un processeur de rang J+3. C'est ainsi, par exemple, lorsqu'il est nécessaire de transmettre des données du processeur PE0 de rang 0 vers le processeur PE3 de rang 3. A cet effet, le deuxième circuit d'aiguillage 2C0 du processeur PE0 établit la liaison TOMD, FROPEG, avec le premier circuit d'aiguillage 1C1 du processeur PE1 du rang 1. Ce premier circuit d'aiguillage établit, grâce à son multiplexeur MUX1, la liaison FROPEG, TOPED, FROMG, avec le deuxième circuit d'aiguillage 2C2 du processeur PE2 de rang 2. Le deuxième circuit d'aiguillage 2C2 du processeur PE2 de rang 2, établit la connexion FROMG, VDO, VGI, avec le deuxième circuit d'aiguillage 2C3 du processeur PE3 de rang 3. Le multiplexeur MUX2 de ce deuxième circuit d'aiguillage 2C3 établit alors la connexion avec le processeur correspondant PE3. Les données provenant du processeur PE0 sont donc transmises au processeur PE3
l) - Cette opération consiste à transmettre des données d'un processeur de rang J, vers un processeur de rang J-3. C'est ainsi par exemple, lorsqu'il est nécessaire de transmettre des données du processeur PE3 de rang 3, vers le processeur PE0 de rang 0. A cet effet, le deuxième circuit d'aiguillage 2C3 du processeur PE3 établit la connexion TOMG, FROPED, avec le premier circuit d'aiguillage 1C2 du processeur PE2 de rang 2. Le multiplexeur MUX1 de ce premier circuit 1C2 établit la connexion FROPED, TOPEG, FROMD, avec le deuxième circuit d'aiguillage 2C1 du processeur de rang 1. Ce deuxième circuit d'aiguillage établit la connexion FROMD, VGO, VDI avec le deuxième circuit d'aiguillage 2C0 du processeur PE0. Le multiplexeur MUX2 de ce deuxième circuit d'aiguillage 2C0 transmet alors les données vers le processeur PE0.

Le dispositif qui vient d'être décrit permet bien d'établir les interconnexions mentionnées plus haut, et permet notamment à chaque processeur de lire aux adresses souhaitées, dans les mémoires de chacun des processeurs, les données qui sont nécessaires pour effectuer le traitement d'un élément d'image, en fonction des données relatives aux éléments d'image environnants, notamment pour une fenêtre de dimensions 3x3. Ce dispositif a bien une configuration de connexion en ligne bouclée, puisque chaque processeur peut communiquer avec le processeur suivant sur cette ligne et que le dernier processeur de la ligne peut communiquer avec le premier processeur de cette ligne.

Les opérations décrites précédemment s'effectuent simultanément sur tous les processeurs. C'est ainsi que, par exemple, lorsque le processeur j transmet ses données au processeur j+3, le processeur j+1 effectue la même opération avec ses données transmises au processeur j+4, et ainsi de suite.

## Revendications

1. Dispositif de traitement de données relatives à des éléments d'image repérés par 16 lignes et par 16 colonnes, comportant des moyens de mémorisation de ces données, et des moyens de traitement des données relatives à chacun de ces éléments, en fonction des données relatives à chacun des éléments situés au moins dans l'environnement immédiat de l'élément traité pour traiter des données relatives à des éléments situés dans des fenêtres ayant chacune au moins neuf éléments repérés parmi les 16 lignes et 16 colonnes, les moyens de traitement comportent au moins un groupe de quatre processeurs identiques (PE0, PE1, PE2, PE3) repérés du rang j=0 au rang j=3, pour traiter des éléments d'image situés sur des lignes successives et appartenant respectivement à des mêmes colonnes successives prédéterminées, les moyens de mémorisation comportant au moins quatre mémoires (MEM0, MEM1, MEM2, MEM3) repérées du rang j=0 au rang j=3 au moins, et respectivement reliées aux processeurs, caracterisé en ce que les quatre mémoires comprenent chacune 64 adresses successives, les premières adresses respectives (adresses 0) des quatre mémoires enregistrant respectivement les données relatives aux éléments d'image de la première ligne (ligne 0) et des quatre premières colonnes (colonnes 0 à 3), les secondes adresses respectives (adresses 1) des quatre mémoires enregistrant respectivement les données relatives aux éléments d'image de la première ligne (ligne 0) et des quatre colonnes successives suivantes (colonnes 4 à 7), et aussi de suite jusqu'aux soixante-quatrièmes adresses (adresses 63) respectives des quatre mémoires qui enregistrent respectivement les données relatives aux éléments d'images de la seizième ligne (ligne 15) et des quatre dernières colonnes (colonnes 12 à 15), la distribution des données dans les mémoires pour une certaine adresse étant telle que les données relatives à un élément d'une ligne sont enregistrées dans une mémoire, et les données relatives à l'élément situé sur la ligne suivante et la colonne dudit élément sont enregistrées dans la mémoire succédante à ladite adresse, l'ordre étant tel que la quatrième mémoire est succédée par la première mémoire, les moyens de traitement comportant en outre des moyens de connexion repérés du rang J=0 au rang J=3 au moins pour relier chaque processeur à sa mémoire et pour interconnecter chaque processeur avec chaque processeur voisin du groupe, pour que les processeurs soient reliés entre eux selon leurs rangs successifs et selon une configuration dite en ligne bouclée, les moyens de connexion étant en outre reliés à un ensemble (C) de commande de séquencement des opérations de traitements et d'adressages effectués par les processeurs.

2. Dispositif selon la revendication 1, caractérisé en ce que chaque processeur (PE0, PE1,...) est relié directment à sa mémoire (MEM0, MEM1,...) pour inscrire ces données dans cette mémoire, les moyens de connexion comportant, pour chaque processeur, un premier et un deuxième circuits d'aiguillage ce données (1C0, 2C0-1C1, 2C1,...) reliés à l'ensemble de séquencement (C), chaque premier circuit d'aiguillage (1C0, 1C1,..) étant en outre relié à la mémoire (MEM0, MEM1,...) et au processeur (PE0, PE1,...) correspondants, chaque deuxième circuit d'aiguillage (2C0, 2C1,...) étant relié au processeur (PE0, PE1,...) correspondant, ce premier circuit d'aiguillage (1C1) de chaque processeur (PE0) étant relié aux deuxièmes circuits d'aiguillage (2C0, 2C2) de deux processeurs voisins par des lignes bidirectionnelles, et le deuxième circuit d'aiguillage (2C1) de chaque processeur étant relié aux deuxièmes circuits d'aiguillage de deux processeurs voisins (2C0, 2C2) par des lignes bidirectionnelles, les premier et deuxième circuits d'aiguillage (1C0, 2C0-1C1, 2C1,...) de chaque processeur de rang J compris entre j=0 et j=3 au moins, comportant des moyens pour :
a) - transmettre des données lues dans la mémoire du processeur vers ce processeur (FROME, TOPE) ;
b) - transmettre des données fournies par le processeur, vers la mémoire de ce processeur (TOME, FROPE) ;
c) - transmettre des données lues dans la mémoire d'un processeur de rang J, vers un processeur de rang J+1 (FROME, TOPED, FROMG) ;
d) - transmettre des données lues dans la mémoire d'un processeur de rang J, vers un processeur de rang J-1 (FROME, TOPEG, FROMD) ;
e) - transmettre des données fournies par un processeur de rang J, vers un processeur de rang J+1 (TOMD, FROPEG, TOPE) ;
f) - transmettre des données fournies par un processeur de rang J, vers un processeur de rang J-1 (TOMG, FROPED, TOPE) ;
g) - transmettre des données de la mémoire d'un processeur de rang J, vers un processeur de rang J+2 (FROME, TOPED, FROMG, VDO, VGI) ;
h) - transmettre des données de la mémoire d'un processeur de rang J, vers un processeur de rang J-2 (FROME, TOPEG, FROMD, VGO, VDI) ;
i) - transmettre les données d'un processeur du rang J, vers un processeur de rang J+2 (TOMD, FROPEG, TOPED, FROMG) ; j) - transmettre des données d'un processeur de rang J, vers un processeur de rang J-2 (TOMG, FROPED, TOPEG, FROMD) ;
k) - transmettre des données d'un processeur de rang J, vers un processeur de rang J+3 (TOMD, FROPEG, TOPED, FROMG, VDO, VGI) ;
l) - transmettre des données d'un processeur de rang J, vers un processeur de rang J-3 (TOMG, FROPED, TOPEG, FROMD, VGO, VDI).

3. Dispositif selon la revendication 2, caractérisé en ce que chaque premier circuit d'aiguillage (1C0, 1C1,....) de rang J comporte un multiplexeur (MUX1) ayant une première entrée (5) reliée à la mémoire (MEM0, MEM1,...) du processeur (PE0, PE1,...) de rang J pour recevoir des données (FROME) lues dans cette mémoire, une deuxième entrée (6) reliée à une sortie du deuxième circuit d'aiguillage de rang J-1 pour recevoir des données (FROPEG) fournies par ce deuxième circuit d'aiguillage de rang J-1, et une troisième entrée (7) reliée à une sortie du deuxième circuit d'aiguillage, de rang J+1, pour recevoir des données (FROPED) fournies par ce deuxième circuit d'aiguillage, de rang J+1, ce multiplexeur comprenant une sortie reliée à une entrée (22, TOPE) du processeur de rang J, à une entrée (TOPEG) du deuxième circuit d'aiguillage de rang J-1 et à une entrée (TOPED) du deuxième circuit d'aiguillage de rang J+1, pour fournir les données reçues par le multiplexeur au processeur de rang J ou aux deuxièmes circuits d'aiguillages de rangs J-1 ou J+1, en fonction de commandes de séquencement reçues sur des entrées de commande (9) du multiplexeur (MUX1), reliées à des sorties des moyens de séquencement (C).

4. Dispositif selon la revendication 3, caractérisé en ce que chaque deuxième circuit d'aiguillage de rang J comporte un multiplexeur (MUX2) relié respectivement par une première entrée (16), à une sortie du processeur de rang J pour recevoir des données fournies par ce processeur, une deuxième entrée (17) reliée à la sortie du multiplexeur (MUX1) du premier circuit d'aiguillage de rang J, pour recevoir des données (FROME, TOPE) provenant de la mémoire de rang J, une troisième et une quatrième entrées (18, 19) reliées respectivement à des sorties du deuxième circuit d'aiguillage de rang J-1 pour recevoir respectivement des données (VGI, FROMG) fournies par le processeur de rang J-1 et par la mémoire de rang J-1, une cinquième et une sixième entrées (20, 21) reliées respectivement à des sorties du deuxième circuit d'aiguillage de rang J+1 pour recevoir respectivement des données (VDI, FROMD) fournies par le processeur et la mémoire de rang J+1, une sortie (22) de ce multiplexeur (MUX2) étant reliée à une entrée du processeur de rang J, ce deuxième circuit d'aiguillage de rang J comprenant en outre un circuit logique (L1) ayant une première entrée reliée à une sortie du deuxième circuit d'aiguillage de rang J+1 pour recevoir des données (FROMD) fournies par la mémoire de rang J+1, une deuxième entrée reliée à une sortie (17) du processeur de rang J pour recevoir des données fournies par ce processeur, et une troisième entrée reliée à une sortie du deuxième circuit d'aiguillage de rang J-1 pour recevoir des données (FROMG) fournies par la mémoire de rang J-1, ce circuit logique (L1) ayant deux sorties respectivement reliées à deux entrées du deuxième circuit d'aiguillage de rang J-1, pour fournir des données (TOMG, VGO) à la mémoire et au processeur de rang J-1, et ayant deux autres sorties respectivement reliées à deux entrées du deuxième circuit d'aiguillage de rang J+1, pour fournir des données (TOMD, VDO) à la mémoire et au processeur de rang J+1, le circuit logique (L1) et le multiplexeur (MUX2) du deuxième circuit d'aiguillage de rang J étant reliés par des entrées de commande (23, 35) à des sorties de l'ensemble de séquencement pour gérer les séquencements des données fournies par les sorties du circuit logique (L1) et par le multiplexeur (MUX2) du deuxième circuit d'aiguillage de rang J.

## Claims

1. Device for processing data relative to pixels designated by 16 lines and 16 columns, having means for storing the said data and means for processing the data relative to each of these pixels, as a function of the data relative to each of the pixels located at least in the immediate vicinity of the processed pixel in order to process the data relative to pixels located in windows, each having at least 9 elements from among the 16 lines and 16 columns, the processing means comprising at least one group of four identical processors (PE0, PE1, PE2, PE3) from order or row j=0 to order or row j=3, in order to process pixels located on successive lines and respectively belonging to the same predetermined successive columns, the storage means comprising at least four memories (MEMO, MEM1, MEM2, MEM3) from order to row j=0 to order or row j=3 and respectively connected to the processors, characterized in that the four memories in each case have 64 successive addresses, the first respective addresses (addresses 0) of the four memories respectively recording the data relative to the pixels of the first line (line 0) and the first four columns (columns 0 to 3) the second respective addresses (addresses 1) of the four memories respectively recording the data relative to the pixels of the first line (line 0) and the four following successive columns (columns 4 to 7) and so on up to the sixty-fourth addresses (addresses 63) of the four memories respectively recording the data relative to the pixels of the sixteenth line (line 15) and four final columns (columns 12 to 15), the distribution of the data in the memories for a certain address being such that the data relative to a pixel of a line are recorded in one memory and the data relative to the pixel located on the following line and the column of said pixel are recorded in the memory following the said address, the order being such that the fourth memory is followed by the first memory, the processing means also incorporating connection means from rank or row j=0 t rank or row j=3 for connecting each processor to its memory and for interconnecting each processor with each adjacent processor of the group, so that the processors are interconnected according to their successive orders or rows and in accordance with a looped line configuration, the connection means also being connected to a sequencing control array (C) for the processing and addressing operations performed by the processors.

2. Device according to claim 1, characterized in that each processor (PE0, PE1, ...) is directly connected to its memory (MEMO, MEM1, ...) in order to record data in said memory, the connection means having for each processor a first and a second data switching circuits (1CO, 2CO-1C1, 2C1, ...) connected to the sequencing array (C), each first switching circuit (1CO, 1C1) also being connected to the memory (MEMO, MEM1) and to the processor (PE0, PE1) corresponding thereto, each second switching circuit (2CO, 2C1) being connected to the corresponding processor (PE0, PE1), said first switching circuit (1C1) of each processor (PE0) being connected to the second switching circuits (2C0, 2C2) of two adjacent processors by bidirectional lines and the second switching circuit (2C1) of each processor is connected to second switching circuits of two adjacent processors (2CO, 2C2) by bidirectional lines, the first and second switching circuits (1CO, 2CO-1C1, 2C1) of each processor of order or row J between j=0 and j=3, having means for:
a) - transmitting data read in the memory of the processor to this processor (FROME, TOPE);
b) - transmitting data supplied by the processor to the memory of this processor (TOME, FROPE);
c) - transmitting data read in the memory of a row J processor to a row J+1 processor (FROME, TOPED, FROMG);
d) - transmitting data read in the memory of a row J processor to a row J-1 processor (FROME, TOPEG, FROMD);
e) - transmitting data supplied by a row J processor to a row J+1 processor (TOMD, FROPEG, TOPE);
f) - transmitting data supplied by a row J processor to a row J-1 processor (TOMG, FROPED, TOPE);
g) - transmitting the data of the memory of a row J processor to a row J+2 processor (FROME, TOPED, FROMG, VDO, VGI);
h) - transmitting the data of the memory of a row J processor to a row J-2 processor (FROME, TOPEG, FROMD, VGO, VDI);
i) - transmitting the data of a row J processor to a row J+2 processor (TOMD, FROPEG, TOPED, FROMG);
j) - transmitting the data of a row J processor to a row J-2 processor (TOMG, FROPED, TOPEG, FROMD);
k) - transmitting the data of a row J processor to a row J+3 processor (TOMD, FROPEG, TOPED, FROMG, VDO, VGI);
l) - transmitting the data of a row J processor to a row J-3 processor (TOMG, FROPED, TOPEG, FROMD, VGO, VDI).

3. Device according to claim 2, characterized in that each first switching circuit (1C0, 1C1, ...) of row J comprises a multiplexor (MUX1) having a first input (5) connected to the memory (MEM0, MEM1, ...) of the row J processor (PE0, PE1, ...) in order to receive data read in this memory, a second input (6) connected to an output of the second switching circuit of row J-1 so as to receive data (FROPEG) supplied by this second switching circuit of row J-1, and a third input (7) connected to an output of the second switching circuit of row J+1 so as to receive data (FROPED) supplied by this second switching circuit of row J+1, this multiplexor comprising an output connected to an input (22, TOPE) of the row J processor, to an input (TOPEG) of the second switching circuit of row J-1 and to an input (TOPED) of the second switching circuit of row J+1 so as to supply the data received by the multiplexor to the row J processor or to the second switching circuits of rows J-1 or J+1 according to the sequencing commands received on control inputs (9) of the multiplexor (MUX1) and connected to outputs of the sequencing means (C).

4. Device according to claim 3, characterized in that each second switching circuit of row J comprises a multiplexor (MUX2) respectively connected by a first input (16) to an output of the row J processor in order to receive data supplied by this processor, a second input (17) connected to the output of the multiplexor (MUX1) of the first switching circuit of row J so as to receive data (FROME, TOPE) originating from the row J memory, a third input and a fourth input (18, 19) respectively connected to outputs of the second switching circuit of row J-1 so as to respectively receive data (VGI, FROMG) supplied by the row J-1 processor and by the row J-1 memory, a fifth input and a sixth input (20, 21) respectively connected to outputs of the second switching circuit of row J+1 in order to respectively receive the data (VDI, FROMD) supplied by the processor and the memory of row J+1, an output (22) of this multiplexor (MUX2) being connected to an input of the row J processor, this second switching circuit of row J also comprising a logic circuit (L1) having a first input connected to an output of the second switching circuit of row J+1 so as to receive data (FROMD) supplied by the memory of row J+1, a second input connected to an output (17) of the row J processor in order to receive data supplied by this processor, and a third input connected to an output of the second switching circuit of row J-1 in order to receive data (FROMG) supplied by the memory of row J-1, this logic circuit (L1) having two outputs respectively connected to two inputs of the second switching circuit of row J-1 in order to supply data (TOMG, VGO) to the memory and processor of row J-1, and having two other outputs respectively connected to two inputs of the second switching circuit of row J+1 so as to supply data to the memory and processor of row J+1, the logic circuit and the multiplexor (MUX2) of the second switching circuit of row J being connected by control inputs (23, 35) to outputs of the sequencing unit so as to manage the sequencings of data supplied by the outputs of the logic circuit (L1) and by the multiplexor (MUX2) of the second switching circuit of row J.

## Patentansprüche

1. Vorrichtung zur Behandlung von Daten, die zu Bildelementen gehören, die durch 16 Zeilen und 16 Spalten festgelegt sind, wobei die Vorrichtung Einrichtungen zur Speicherung dieser Daten umfaßt sowie Einrichtungen zur Verarbeitung der zu jedem dieser Elemente gehörenden Daten in Abhängigkeit von Daten, die zu jedem der Elemente, die zumindest in der unmittelbaren Umgebung des behandelten Elements gelegen sind, gehören, um Daten zu verarbeiten, die zu Elementen gehören, die sich in Fenstern befinden, die jeweils wenigstens neun Elemente haben, die auf den 16 Zeilen und 16 Spalten festgelegt sind,
wobei die Verarbeitungseinrichtungen wenigstens eine Gruppe von vier gleichen Prozessoren (PE0, PE1, PE2, PE3) umfassen, die von der Nummer J=0 bis zur Nummer J=3 gekennzeichnet werden, um Bildelemente, die auf aufeinanderfolgenden Zeilen gelegen sind und jeweils denselben vorbestimmten aufeinanderfolgenden Spalten angehören, zu verarbeiten,
wobei die Speichereinrichtungen wenigstens vier Speicher (MEM0, MEM1, MEM2, MEM3) umfassen, die wenigstens von der Nummer J=0 bis zur Nummer J=3 gekennzeichnet werden und die jeweils mit den Prozessoren verbunden sind,
dadurch gekennzeichnet, daß jeder der vier Speicher 64 aufeinanderfolgende Adressen umfaßt, wobei die jeweils ersten Adressen (Adressen 0) der vier Speicher jeweils die zu den Bildelementen der ersten Zeile (Zeile 0) und der vier ersten Spalten (Spalten 0 bis 3) gehörenden Daten aufnehmen, die jeweils zweiten Adressen (Adressen 1) der vier Speicher die zu den Bildelementen der ersten Zeile (Zeile 0) und der vier anschließend folgenden vier Spalten (Spalten 4 bis 7) gehörenden Daten aufnehmen, und so in der Folge bis zu den jeweils vierundsechzigsten Adressen (Adressen 63) der vier Speicher, die jeweils die zu den Bildelementen der sechzehnten Zeile (Zeile 15) und der vier letzten Spalten (Spalten 12 bis 15) gehörenden Daten aufnehmen,
wobei die Verteilung der Daten auf die Speicher für eine bestimmte Adresse derart ist, daß die zu einem Element einer Zeile gehörenden Daten in einen Speicher aufgenommen werden und die Daten, die zu einem auf der folgenden Zeile und auf der Spalte des genannten Elements gelegenen Element gehören, in den folgenden Speicher bei genannter Adresse aufgenommen werden, wobei die Reihenfolge derart ist, daß der vierte Speicher vom ersten Speicher gefolgt wird,
wobei die Verarbeitungseinrichtungen darüber hinaus Einrichtungen zur Verbindung enthalten, die wenigstens von der Nummer J=0 bis zur Nummer J=3 gekennzeichnet werden, um jeden Prozessor mit seinem Speicher zu verbinden und um jeden Prozessor mit jedem benachbarten Prozessor der Gruppe zu verbinden, damit die Prozessoren untereinander entsprechend ihrer aufeinanderfolgenden Nummer und gemäß einer Konfiguration, die als Konfiguration mit geschleifter Leitung bezeichnet wird, verbunden sind, wobei die Verbindungseinrichtungen darüber hinaus verbunden sind mit einer Anordnung (C) zur Ablaufsteuerung für die Verarbeitungs- und Adressierungsoperationen, die von den Prozessoren ausgeführt werden.

2. Vorrichtung nach Anspruch 1, dadurch gekennzeichnet, daß jeder Prozessor (PE0, PE1, ...) direkt mit seinem Speicher (MEM0, MEM1, ...) verbunden ist, um Daten in diesen Speicher zu schreiben, wobei die Verbindungseinrichtungen für jeden Prozessor eine erste und eine zweite Daten-Verteilerschaltung (1C0, 2C0-1C1, 2C1, ...) umfassen, die mit der Ablaufanordnung (C) verbunden sind, wobei jede erste Verteilerschaltung (1C0, 1C1, ...) darüber hinaus mit dem entsprechenden Speicher (MEM0, MEM1, ...) und mit dem entsprechenden Prozessor (PE0, PE1, ...) verbunden ist und jede zweite Verteilerschaltung (2C0, 2C1, ...) mit dem entsprechenden Prozessor (PE0, PE1, ...) verbunden ist, wobei diese erste Verteilerschaltung (1C1) jedes Prozessors (PE0) mit den zweiten Verteilerschaltungen zweier benachbarter Prozessoren (2C0, 2C2) über bidirektionale Leitungen verbunden ist und die zweite Verteilerschaltung (2C1) jedes Prozessors mit den zweiten Verteilerschaltungen zweier benachbarter Prozessoren (2C0, 2C2) über bidirektionale Leitungen verbunden ist, wobei die erste und die zweite Verteilerschaltung (1C0, 2C0-1C1, 2C1, ...) jedes Prozessors der Nummer J, wenigstens zwischen J=0 und J=3, Einrichtungen enthalten, um:
a) - im Speicher des Prozessors gelesene Daten zu diesem Prozessor zu übertragen (FROME, TOPE),
b) - vom Prozessor gelieferte Daten zum Speicher dieses Prozessors zu übertragen (TOME, FROPE),
c) - im Speicher eines Prozessors der Nummer J gelesene Daten zu einem Prozessor der Nummer J+1 zu übertragen (FROME, TOPED, FROMG),
d) - im Speicher eines Prozessors der Nummer J gelesene Daten zu einem Prozessor der Nummer J-1 zu übertragen (FROME, TOPEG, FROMD),
e) - von einem Prozessor der Nummer J gelieferte Daten zu einem Prozessor der Nummer J+1 zu übertragen (TOMD, FROPEG, TOPE),
f) - von einem Prozessor der Nummer J gelieferte Daten zu einem Prozessor der Nummer J-1 zu übertragen (TOMG, FROPED, TOPE),
g) - Daten des Speichers eines Prozessors der Nummer J zu einem Prozessor der Nummer J+2 zu übertragen (FROME, TOPED, FROMG, VDO, VGI),
h) - Daten des Speichers eines Prozessors der Nummer J zu einem Prozessor der Nummer J-2 zu übertragen (FROME, TOPEG, FROMD, VGO, VDI),
i) - Daten eines Prozessors der Nummer J zu einem Prozessor der Nummer J+2 zu übertragen (TOMD, FROPEG, TOPED, FROMG),
j) - Daten eines Prozessors der Nummer J zu einem Prozessor der Nummer J-2 zu übertragen (TOMG, FROPED, TOPEG, FROMD),
k) - Daten eines Prozessors der Nummer J zu einem Prozessor der Nummer J+3 zu übertragen (TOMD, FROPEG, TOPED, FROMG, VDO, VGI) und
l) - Daten eines Prozessors der Nummer J zu einem Prozessor der Nummer J-3 zu übertragen (TOMG, FROPED, TOPEG, FROMD, VGO, VDI).

3. Vorrichtung nach Anspruch 2, dadurch gekennzeichnet, daß jede erste Verteilerschaltung (1C0, 1C1, ...) der Nummer J einen Multiplexer (MUX1) aufweist, der einen ersten Eingang (5) hat, der mit dem Speicher (MEM0, MEM1, ...) des Prozessors (PE0, PE1, ...) der Nummer J verbunden ist, um in diesem Speicher gelesene Daten (FROME) zu empfangen, einen zweiten Eingang (6), der mit einem Ausgang der zweiten Verteilerschaltung der Nummer J-1 verbunden ist, um von dieser zweiten Verteilerschaltung der Nummer J-1 gelieferte Daten (FROPEG) zu empfangen, und einen dritten Eingang (7), der mit einem Ausgang der zweiten Verteilerschaltung der Nummer J+1 verbunden ist, um von dieser zweiten Verteilerschaltung der Nummer J+1 gelieferte Daten (FROPED) zu empfangen, wobei dieser Multiplexer einen Ausgang besitzt, der verbunden ist mit einem Eingang (22, TOPE) des Prozessors der Nummer J, mit einem Eingang (TOPEG) der zweiten Verteilerschaltung der Nummer J-1 und mit einem Eingang (TOPED) der zweiten Verteilerschaltung der Nummer J+1, um vom Multiplexer empfangene Daten an den Prozessor der Nummer J oder an die zweiten Verteilerschaltungen der Nummer J-1 oder J+1 zu liefern, in Abhängigkeit von Ablaufbefehlen, die auf den Steuereingängen (9) des Multiplexers (MUX1) empfangen werden, die mit Ausgängen der Ablaufsteuerungseinrichtungen (C) verbunden sind.

4. Vorrichtung nach Anspruch 3, dadurch gekennzeichnet, daß jede zweite Verteilerschaltung der Nummer J einen Multiplexer (MUX2) enthält, der jeweils durch einen ersten Eingang (16) mit einem Ausgang des Prozessors der Nummer J verbunden ist, um von diesem Prozessor gelieferte Daten zu empfangen, während ein zweiter Eingang (17) mit dem Ausgang des Multiplexers (MUX1) der ersten Verteilerschaltung der Nummer J verbunden ist, um Daten (FROME, TOPE), die von dem Speicher der Nummer J kommen, zu empfangen, ein dritter und ein vierter Eingang (18, 19) jeweils mit Ausgängen der zweiten Verteilerschaltung der Nummer J-1 verbunden sind, um jeweils vom Prozessor der Nummer J-1 und vom Speicher der Nummer J-1 gelieferte Daten (VGI, FROMG) zu empfangen, und ein fünfter und ein sechster Eingang (20, 21) jeweils mit Ausgängen der zweiten Verteilerschaltung der Nummer J+1 verbunden sind, um jeweils vom Prozessor und dem Speicher der Nummer J+1 gelieferte Daten (VDI, FROMD) zu empfangen, während ein Ausgang (22) dieses Multiplexers (MUX2) mit einem Eingang des Prozessors der Nummer J verbunden ist, wobei diese zweite Verteilerschaltung der Nummer J ferner eine logische Schaltung (L1) umfaßt, die einen ersten Eingang hat, der mit einem Ausgang der zweiten Verteilerschaltung der Nummer J+1 verbunden ist, um vom Speicher der Nummer J+1 gelieferte Daten (FROMD) zu empfangen, einen zweiten Eingang, der mit einem Ausgang (17) des Prozessors der Nummer J verbunden ist, um von diesem Prozessor gelieferte Daten zu empfangen, und einen dritten Eingang, der mit einem Ausgang der zweiten Verteilerschaltung der Nummer J-1 verbunden ist, um vom Speicher der Nummer J-1 gelieferte Daten (FROMG) zu empfangen, wobei diese logische Schaltung (L1) zwei Ausgänge hat, die jeweils mit zwei Eingängen der zweiten Verteilerschaltung der Nummer J-1 verbunden sind, um Daten (TOMG, VGO) an den Speicher und an den Prozessor der Nummer J-1 zu liefern, und zwei andere Ausgänge hat, die jeweils mit zwei Eingängen der zweiten Verteilerschaltung der Nummer J+1 verbunden sind, um Daten (TOMD, VDO) an den Speicher und an den Prozessor der Nummer J+1 zu liefern, wobei die logische Schaltung (L1) und der Multiplexer (MUX2) der zweiten Verteilerschaltung der Nummer J durch Steuereingänge (23, 35) mit Ausgängen der Anordnung zur Ablaufsteuerung verbunden sind, um die Abläufe der durch die Ausgänge der logischen Schaltung (L1) und durch den Multiplexer (MUX2) der zweiten Verteilerschaltung der Nummer J gelieferten Daten zu steuern.
